# EUROPEAN PATENT APPLICATION

(11) **EP 4 202 674 A1**
(43) Date of publication of application: **28.06.2023**
(21) Application number: 21858082.7
(22) Date of filing: 15.07.2021
(51) Int. Cl.: G06F 9/50, G06F 16/182

(54) **INFORMATION PROCESSING DEVICE, INFORMATION PROCESSING METHOD, AND INFORMATION PROCESSING PROGRAM**

(30) Priority: 18.08.2020 JP 2020138221
(71) Applicant: FUJIFILM Corporation, Tokyo 106-8620 (JP)
(72) Inventor: OISHI, Yutaka, Tokyo 106-8620 (JP); MATSUMURA, Koji, Tokyo 106-8620 (JP); KONDO, Michitaka, Tokyo 106-8620 (JP); UNO, Yuko, Tokyo 106-8620 (JP)
(74) Representative: Klunker IP Patentanwälte PartG mbB
(86) International application number: PCT/JP2021/026633
(87) International publication number: WO 2022/038933

(57) **Abstract**

An information processing apparatus includes at least one processor and stores an object to be stored in any of a plurality of storage nodes in accordance with a distribution rule set in advance. The processor is configured to, in a case where the object to be stored is a new object that is newly created, distribute the new object in accordance with a distribution rule set at a point in time at which a storage request of the new object is made. The processor is configured to, in a case where the object to be stored is an update object that is an update of an existing object stored in any of the plurality of storage nodes, distribute the update object to the same storage node as a storage node in which the corresponding existing object is stored, in accordance with a distribution rule applied to the corresponding existing object.

## Description

### BACKGROUND OF THE INVENTION

### 1. Field of the Invention

The disclosed technology relates to an information processing apparatus, an information processing method, and an information processing program.

### 2. Description of the Related Art

The following technology has been known as a technology related to distribution of objects to a plurality of storage nodes in an object storage system comprising a plurality of storage nodes storing objects composed of data and metadata.

For example, JP2010-272011A discloses determining a registration destination node in which a newly created object or an object after update is to be registered based on an object ID for identifying the object. In addition, setting a value of a tree part in an object ID of an object before update as the tree part of the object ID of the object after update is disclosed.

JP2017-184195A discloses that in a case of setting a first rule for deciding a transmission destination of an object based on an identifier uniquely assigned to the object in a plurality of communication devices on a route of transmitting the object to any of a plurality of real storage nodes, the setting is performed based on a first assignment relationship for assigning the identifier to any of the plurality of real storage nodes and a connection relationship between the plurality of communication devices and the plurality of real storage nodes.

JP2004-229130A discloses receiving a change request of a distribution rule for distributing traffic to a distribution destination device group, determining whether a session of the traffic is an existing session established before the change request of the rule or a new session established after the change request of the rule, distributing, in a case where a determination that the session is an existing session is made, the traffic to the distribution destination device group in accordance with the distribution rule before the change request of the rule, and distributing, on the other hand, in a case where a determination that the session is a new session is made, the traffic to the distribution destination device group in accordance with the distribution rule after the change request of the rule.

### SUMMARY OF THE INVENTION

In update processing of the object in the object storage system, the object after update is not stored by overwriting the existing object and is stored in the storage node as a separate object from the existing object.

In addition, in the object storage system, for reliability improvement, load distribution, and the like of the system, a plurality of storage nodes are prepared, and an object transmitted from a user is distributed to any of the plurality of storage nodes based on a distribution rule set in advance.

In such a system, in a case where a storage node is newly added, an object cannot be distributed to the newly added storage node in a case where the object is distributed in accordance with a distribution rule (hereinafter, referred to as an old rule) employed before the addition of the storage node. Therefore, employing a new distribution rule (hereinafter, referred to as a new rule) so that the newly added storage node is included in a distribution destination is considered. In this case, an update object that is an update of the existing object distributed in accordance with the old rule may be distributed in accordance with the new rule. Consequently, the update object may be stored in a storage node different from a storage node in which the existing object is stored. In a case where the existing object and the update object are stored in different storage nodes, it may be difficult to specify the most recent object.

While a case of changing the distribution rule in accordance with the addition of the storage node has been illustrated in the above description, an assumption that the distribution rule is changed regardless of the addition of the storage node is also made. In addition, an assumption that a plurality of distribution rules coexist and use of the distribution rules is differentiated in accordance with a situation is also made. In any of the cases, the existing object and the update object may be stored in different storage nodes because of the presence of the plurality of distribution rules, and it may be difficult to specify the most recent object.

The disclosed technology is conceived in view of the above circumstances, and an object thereof is to facilitate specification of the most recent object even in a case where a plurality of distribution rules for distributing an object to any of a plurality of storage nodes are present.

An information processing apparatus according to an aspect of the disclosed technology performs processing of storing an object to be stored in any of a plurality of storage nodes in accordance with a distribution rule set in advance, the apparatus comprising at least one processor. The processor is configured to, in a case where the object to be stored is a new object that is newly created, distribute the new object in accordance with a distribution rule set at a point in time at which a storage request of the new object is made. The processor is configured to, in a case where the object to be stored is an update object that is an update of an existing object stored in any of the plurality of storage nodes, distribute the update object to the same storage node as a storage node in which the corresponding existing object is stored, in accordance with a distribution rule applied to the corresponding existing object.

The processor may be configured to distribute an object accommodated in a first accommodation region associated with a first distribution rule among a plurality of accommodation regions for receiving the object to be stored, in accordance with the first distribution rule. In addition, the processor may be configured to distribute an object accommodated in a second accommodation region associated with a second distribution rule among the plurality of accommodation regions, in accordance with the second distribution rule.

In a case where the distribution rule includes a first distribution rule set before addition of a storage node and a second distribution rule that is set after the addition of the storage node and that includes the added storage node in a distribution destination, the processor may be configured to, in a case where the object to be stored is the new object, distribute the new object in accordance with the second distribution rule. In addition, the processor may be configured to, in a case where the object to be distributed is the update object, distribute the update object to the same storage node as the storage node in which the corresponding existing object is stored, in accordance with the distribution rule applied to the corresponding existing object out of the first distribution rule and the second distribution rule.

In a case where the update object has same identification information as the corresponding existing object, the processor may be configured to decide a storage node as a distribution destination of the object based on the identification information. In this case, the processor may be configured to decide the storage node as the distribution destination of the object based on a value of a remainder in dividing a hash value of the identification information by a divisor corresponding to the applied distribution rule.

The processor may be configured to receive a create instruction of an accommodation region for receiving the object to be stored and a designation of an installation location of a storage node group as a storage destination of the object received in the accommodation region, and apply a distribution rule associated with the designated storage location as a distribution rule in distributing the object received in the accommodation region for which the create instruction is provided to the storage node group installed in the designated installation location.

An information processing method according to another aspect of the disclosed technology is an information processing method for performing processing of storing an object to be stored in any of a plurality of storage nodes in accordance with a distribution rule set in advance, the method comprising causing at least one processor provided in an information processing apparatus to execute distributing, in a case where the object to be stored is a new object that is newly created, the new object in accordance with a distribution rule set at a point in time at which a storage request of the new object is made, and distributing, in a case where the object to be stored is an update object that is an update of an existing object stored in any of the plurality of storage nodes, the update object to the same storage node as a storage node in which the corresponding existing object is stored, in accordance with a distribution rule applied to the corresponding existing object.

An information processing program according to still another aspect of the disclosed technology is an information processing program causing at least one processor provided in an information processing apparatus to execute processing of storing an object to be stored in any of a plurality of storage nodes in accordance with a distribution rule set in advance, the program causing the processor to execute a process comprising distributing, in a case where the object to be stored is a new object that is newly created, the new object in accordance with a distribution rule set at a point in time at which a storage request of the new object is made, and distributing, in a case where the object to be stored is an update object that is an update of an existing object stored in any of the plurality of storage nodes, the update object to the same storage node as a storage node in which the corresponding existing object is stored, in accordance with a distribution rule applied to the corresponding existing object.

According to the disclosed technology, specification of the most recent object can be facilitated even in a case where a plurality of distribution rules for distributing an object to any of a plurality of storage nodes are present.

### BRIEF DESCRIPTION OF THE DRAWINGS

Fig. 1 is a diagram illustrating an example of a configuration of a storage system according to an embodiment of the disclosed technology.
Fig. 2 is a diagram illustrating an example of a hardware configuration of an information processing apparatus according to the embodiment of the disclosed technology.
Fig. 3 is a diagram illustrating an example of rule information according to the embodiment of the disclosed technology.
Fig. 4 is a functional block diagram illustrating an example of a functional configuration of the information processing apparatus according to the embodiment of the disclosed technology.
Fig. 5A is a diagram illustrating an example of an aspect of distributing an object in accordance with a first distribution rule according to the embodiment of the disclosed technology.
Fig. 5B is a diagram illustrating an example of an aspect of distributing an object in accordance with a second distribution rule according to the embodiment of the disclosed technology.
Fig. 6 is a flowchart illustrating an example of a flow of processing performed by executing an information processing program by a CPU according to the embodiment of the disclosed technology.
Fig. 7 is a flowchart illustrating an example of a flow of decision processing according to the embodiment of the disclosed technology.
Fig. 8 is a diagram illustrating an example of the configuration of the storage system according to the embodiment of the disclosed technology.
Fig. 9 is a diagram illustrating an example of the rule information according to the embodiment of the disclosed technology.
Fig. 10 is a diagram illustrating an example of a correspondence relationship between a region in which a server group is installed and a distribution rule.
Fig. 11 is a diagram illustrating an example of the rule information according to the embodiment of the disclosed technology.

### DESCRIPTION OF THE PREFERRED EMBODIMENTS

Hereinafter, an example of an embodiment of the disclosed technology will be described with reference to the drawings. The same or equivalent constituents and parts in each drawing will be designated by the same reference numerals, and description thereof may not be repeated.

### [First Embodiment]

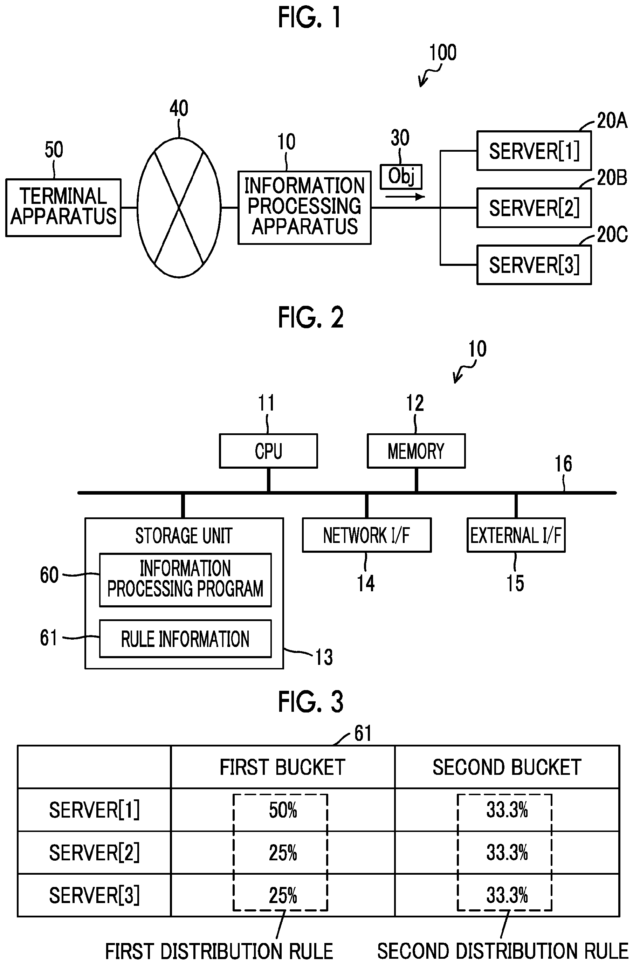

Fig. 1 is a diagram illustrating an example of a configuration of a storage system 100 according to the embodiment of the disclosed technology. The storage system 100 is configured to include an information processing apparatus 10 and a server[1] 20A to a server[3] 20C. The storage system 100 is connected to a terminal apparatus 50 via a network 40. The terminal apparatus 50 is a computer used by a user who uses the storage system 100. The storage system 100 stores an object 30 for which a storage request is made from the terminal apparatus 50 and, in a case where a readout request of the object is made from the terminal apparatus 50, reads out and transmits the requested object to the terminal apparatus 50. The object 30 is configured to include a data body and metadata related to the data body.

Each of the server[1] 20A to the server[3] 20C constitutes a storage node, and the object for which the storage request is made from the terminal apparatus 50 is stored in any of the server[1] 20A to the server[3] 20C. While three servers constituting the storage nodes are illustrated in Fig. 1, the number of servers comprised in the storage system can be appropriately increased or decreased.

The information processing apparatus 10 functions as a load balancer that distributes loads of the server[1] 20A to the server[3] 20C. The information processing apparatus 10 is connected to each of the server[1] 20A to the server[3] 20C. The object 30 for which the storage request is made from the terminal apparatus 50 is supplied to the information processing apparatus 10. The information processing apparatus 10 distributes the object 30 to be stored supplied from the terminal apparatus 50 to any of the server[1] 20A to the server[3] 20C in accordance with a predetermined distribution rule. For example, the distribution rule may define an allocation ratio (distribution ratio) of the object for each of the server[1] 20A to the server[3] 20C.

Fig. 2 is a diagram illustrating an example of a hardware configuration of the information processing apparatus 10. The information processing apparatus 10 includes a central processing unit (CPU) 11, a memory 12 as a transitory storage region, and a non-volatile storage unit 13. In addition, the information processing apparatus 10 includes a network interface 14 connected to the network 40 and an external interface 15 to which the server[1] 20A to the server[3] 20C are connected. The CPU 11, the memory 12, the storage unit 13, the network interface 14, and the external interface 15 are connected to a bus 16.

The storage unit 13 is implemented by a storage medium such as a hard disk drive (HDD), a solid state drive (SSD), or a flash memory. The storage unit 13 stores an information processing program 60 and rule information 61 described later. The CPU 11 reads out the information processing program 60 from the storage unit 13 into the memory 12 and executes the information processing program 60. The CPU 11 is an example of a processor according to the embodiment of the disclosed technology.

For example, access to the storage system 100 is performed via a management console displayed on a web browser operating on the terminal apparatus 50. In a case of storing an object in the storage system 100, the user creates a bucket on the management console and arranges the object to be stored in the bucket. The bucket is a virtual accommodation region for receiving the object to be stored. The user can create a plurality of buckets. In a case where the user arranges an object to which an object key that is identification information of the object is assigned, in the bucket and provides an upload instruction of the object on the management console, the object is transmitted to the storage system 100 and is stored in any of the server[1] 20A to the server[3] 20C.

The distribution rule in a case where the information processing apparatus 10 distributes the object to be stored to the server[1] 20A to the server[3] 20C is associated with the bucket. In a case where the plurality of buckets are created, the distribution rule is set in the information processing apparatus 10 for each bucket. A correspondence relationship between the buckets and the distribution rules and content of the distribution rules are stored in the storage unit 13 of the information processing apparatus 10 as rule information 61.

Fig. 3 is a diagram illustrating an example of the rule information 61 stored in the storage unit 13 of the information processing apparatus 10. In Fig. 3, a first distribution rule associated with a first bucket and a second distribution rule associated with a second bucket are illustrated. In the example illustrated in Fig. 3, the first distribution rule is defined as setting an allocation ratio of the object for the server[1] 20A to 50%, setting the allocation ratio of the object for the server[2] 20B to 25%, and setting the allocation ratio of the object for the server[3] 20C to 25% (allocation ratio of 2:1:1). In addition, the second distribution rule is defined as setting the allocation ratio of the object for each of the server[1] 20A to the server[3] 20C to 33.3% (allocation ratio of 1:1:1).

For example, in a case where the user newly creates a bucket, the information processing apparatus 10 generates the rule information 61 including the distribution rule as illustrated in Fig. 3 and stores the rule information 61 in the storage unit 13. At this point, the information processing apparatus 10 may calculate the allocation ratio of the object for each server in accordance with the number, processing performance, and the like of servers comprised in the storage system 100. The distribution rule can also be arbitrarily set and changed by a manager of the information processing apparatus 10.

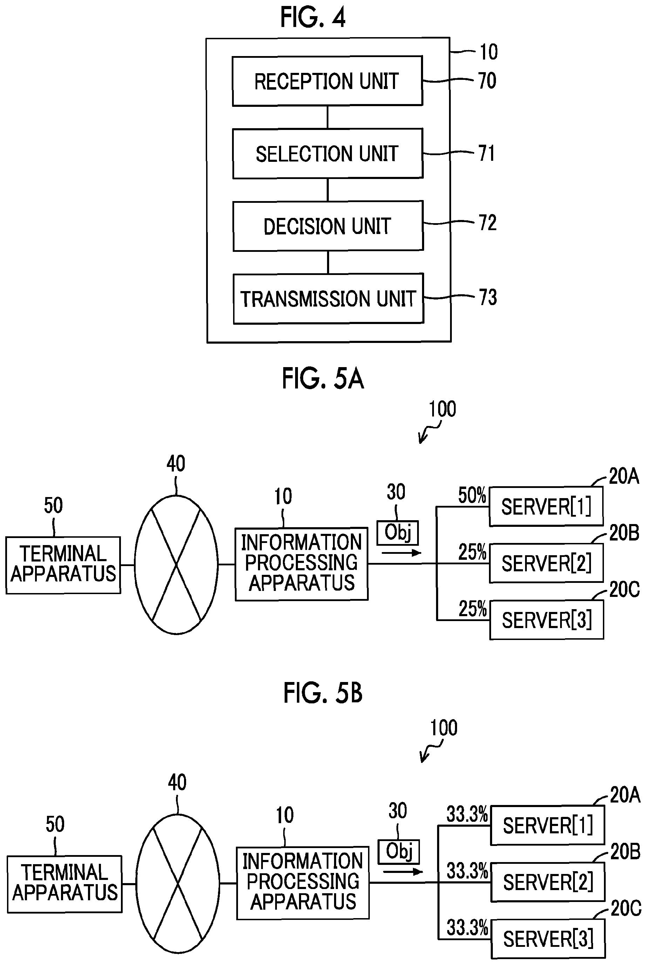

Fig. 4 is a functional block diagram illustrating an example of a functional configuration of the information processing apparatus 10 in a case of distributing objects to the server[1] 20A to the server[3] 20C. As illustrated in Fig. 4, the information processing apparatus 10 includes a reception unit 70, a selection unit 71, a decision unit 72, and a transmission unit 73. The information processing apparatus 10 functions as the reception unit 70, the selection unit 71, the decision unit 72, and the transmission unit 73 by executing the information processing program 60 by the CPU 11.

As described above, in a case where the user arranges the object to be stored in the bucket and provides the upload instruction, the object to be stored is transmitted to the storage system 100. Identification information of the bucket in which the object is arranged is attached to the object to be stored. The reception unit 70 receives the object to be stored transmitted from the terminal apparatus 50.

The selection unit 71 selects the distribution rule for distributing the object to be stored to the server[1] 20A to the server[3] 20C. Specifically, the selection unit 71 specifies the bucket in which the object is accommodated based on the identification information of the bucket attached to the object to be stored. The selection unit 71 refers to the rule information 61 and selects a distribution rule corresponding to the specified bucket as the distribution rule to be applied to the object to be stored. For example, in a case where the object to be stored is accommodated in the first bucket, the selection unit 71 selects the first distribution rule associated with the first bucket. On the other hand, in a case where the object to be stored is accommodated in the second bucket, the selection unit 71 selects the second distribution rule associated with the second bucket.

The decision unit 72 decides a distribution destination corresponding to the distribution rule selected by the selection unit 71 from the server[1] 20A to the server[3] 20C in the following procedure. The decision unit 72 calculates a hash value a of identification information (object key) of the object to be stored. The decision unit 72 calculates a remainder c in dividing the hash value a by a divisor b determined in accordance with the selected distribution rule. The decision unit 72 decides a server associated with a value of the remainder c as the distribution destination of the object to be stored.

For example, in a case where the distribution rule selected by the selection unit 71 is the first distribution rule (allocation ratio of 2:1:1) illustrated in Fig. 3, the decision unit 72 derives 4 (= 2 + 1 + 1) as the divisor b determined in accordance with the distribution rule. The decision unit 72 decides the distribution destination of the object to be stored as the server[1] 20A in a case where the remainder c in dividing the hash value a of the identification information of the object to be stored by the divisor b (= 4) is 0 or 1, decides the distribution destination of the object to be stored as the server[2] 20B in a case where the remainder c is 2, and decides the distribution destination of the object to be stored as the server[3] 20C in a case where the remainder c is 3. Accordingly, as illustrated in Fig. 5A, the distribution of the object to be stored to the server[1] 20A to the server[3] 20C can be performed using the allocation ratio (2:1:1) corresponding to the first distribution rule.

On the other hand, in a case where the distribution rule selected by the selection unit 71 is the second distribution rule (allocation ratio of 1:1:1) illustrated in Fig. 3, the decision unit 72 derives 3 (= 1 + 1 + 1) as the divisor b determined in accordance with the distribution rule. The decision unit 72 decides the distribution destination of the object to be stored as the server[1] 20A in a case where the remainder c in dividing the hash value a of the identification information of the object to be stored by the divisor b (= 3) is 0, decides the distribution destination of the object to be stored as the server[2] 20B in a case where the remainder c is 1, and decides the distribution destination of the object to be stored as the server[3] 20C in a case where the remainder c is 2. Accordingly, as illustrated in Fig. 5B, the distribution of the object to be stored to the server[1] 20A to the server[3] 20C can be performed using the allocation ratio (1:1:1) corresponding to the second distribution rule.

As described above, by deciding the distribution destination in accordance with the remainder c in dividing the hash value a of the identification information (object key) of the object to be stored by the divisor b determined in accordance with the selected distribution rule, the distribution of the object to be stored to the server[1] 20A to the server[3] 20C can be performed using the allocation ratio corresponding to the selected distribution rule. A correspondence relationship between the remainder c and the server as the distribution destination for each distribution rule may be included in the rule information 61 or may be stored in the storage unit 13 separately from the rule information 61.

The transmission unit 73 transmits the object to be stored to the server as the distribution destination decided by the decision unit 72 among the server[1] 20A to the server[3] 20C. The object to be stored is stored in a storage medium such as a hard disk comprised in the server as the distribution destination.

Here, a case of updating an existing object already stored in any of the server[1] 20A to the server[3] 20C is considered. In this case, an update object that is an update of the existing object is stored in the storage system 100 as a separate object from the existing object. That is, the update of the object in the storage system 100 is performed by "adding the update object" instead of so-called "data overwriting". In such a system, in a case where the update object is stored in a server different from a server in which the corresponding existing object is stored, it is difficult to specify the most recent object.

In a case of updating the existing object, the user arranges the update object to which the same identification information (object key) as the existing object is assigned in the same bucket as a bucket in which the existing object is accommodated. Accordingly, the information processing apparatus 10 can distribute the update object in accordance with the same distribution rule as a distribution rule applied to the existing object.

In addition, as described above, the information processing apparatus 10 decides the distribution destination in accordance with the remainder c in dividing the hash value a of the identification information of the object by the divisor b determined in accordance with the selected distribution rule. Since identification information of the update object is the same as identification information of the existing object, the remainder c calculated for the update object is the same as the remainder c calculated for the existing object. Accordingly, the information processing apparatus 10 can distribute the update object to the same server as the server in which the existing object is stored.

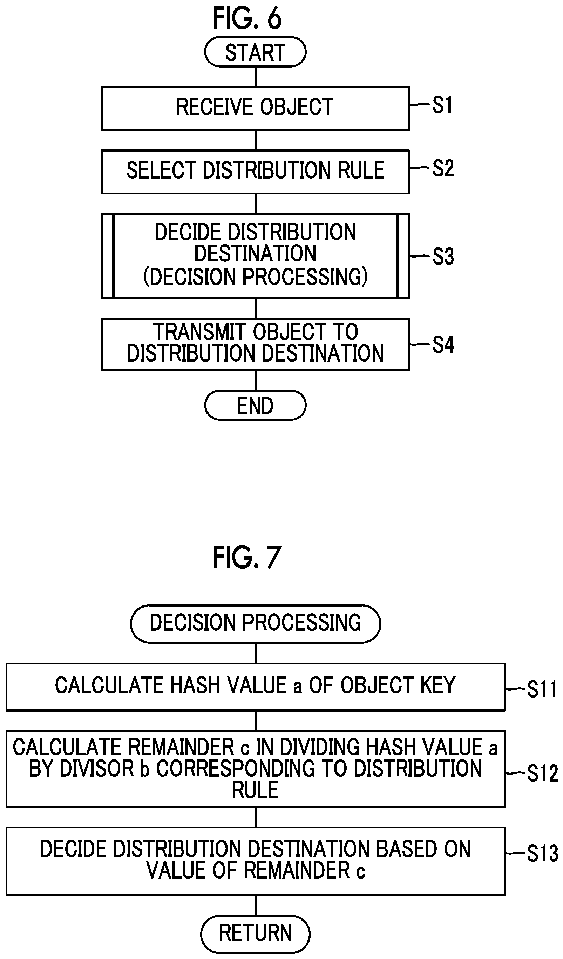

Hereinafter, an action of the information processing apparatus 10 will be described. Fig. 6 is a flowchart illustrating an example of a flow of processing performed by executing the information processing program 60 by the CPU 11. For example, the information processing program 60 is executed in a case where the storage request of the object is made from the terminal apparatus 50. An assumption that the rule information 61 in which the distribution rule for each bucket is determined as illustrated in Fig. 3 is stored in advance in the storage unit 13 is made.

In step S1, the reception unit 70 receives the object to be stored transmitted from the terminal apparatus 50.

In step S2, the selection unit 71 selects the distribution rule to be applied to the object received in step S1. Specifically, the selection unit 71 specifies the bucket in which the object is accommodated based on the identification information of the bucket attached to the received object. The selection unit 71 refers to the rule information 61 and selects the distribution rule corresponding to the specified bucket as the distribution rule to be applied to the object.

In step S3, the decision unit 72 performs decision processing of deciding the distribution destination corresponding to the distribution rule selected in step S2 from the server[1] 20A to the server[3] 20C. Here, Fig. 7 is a flowchart illustrating details of the decision processing. Hereinafter, the decision processing will be described with reference to the flowchart in Fig. 7.

In step S11, the decision unit 72 calculates the hash value a of the identification information (object key) of the object received in step S1.

In step S12, the decision unit 72 calculates the remainder c in dividing the hash value a by the divisor b determined in accordance with the distribution rule selected in step S2.

In step S13, the decision unit 72 decides the distribution destination of the object received in step S1 based on the value of the remainder c calculated in step S12.

With reference to Fig. 6, in step S4, the transmission unit 73 transmits the object received in step S1 to the server as the distribution destination decided in step S3. The object is stored in the storage medium such as the hard disk comprised in the server as the distribution destination.

As described so far, the information processing apparatus 10 according to the present embodiment distributes the object to any of the server[1] 20A to the server[3] 20C each functioning as the storage node, in accordance with the distribution rule set in advance. In a case where the object to be distributed is a new object that is newly created, the information processing apparatus 10 distributes the new object in accordance with the distribution rule set at a point in time at which a storage request of the new object is made. In addition, in a case where the object to be distributed is the update object that is the update of the existing object stored in any of the server[1] 20A to the server[3] 20C, the information processing apparatus 10 distributes the update object to the same server as the server in which the corresponding existing object is stored in accordance with the distribution rule applied to the corresponding existing object.

According to the information processing apparatus 10 according to the embodiment of the disclosed technology, even in a case where a plurality of distribution rules are present, the update object is stored in the same server as the server in which the corresponding existing object is stored. Thus, the specification of the most recent object can be facilitated.

In addition, the information processing apparatus 10 sets the distribution rule for each bucket created by the user. That is, for the object accommodated in the first bucket associated with the first distribution rule, the information processing apparatus 10 distributes the object in accordance with the first distribution rule. For the object accommodated in the second bucket associated with the second distribution rule, the object is distributed in accordance with the second distribution rule. By enabling the distribution rule to be set for each bucket, the servers can be efficiently operated.

### [Second Embodiment]

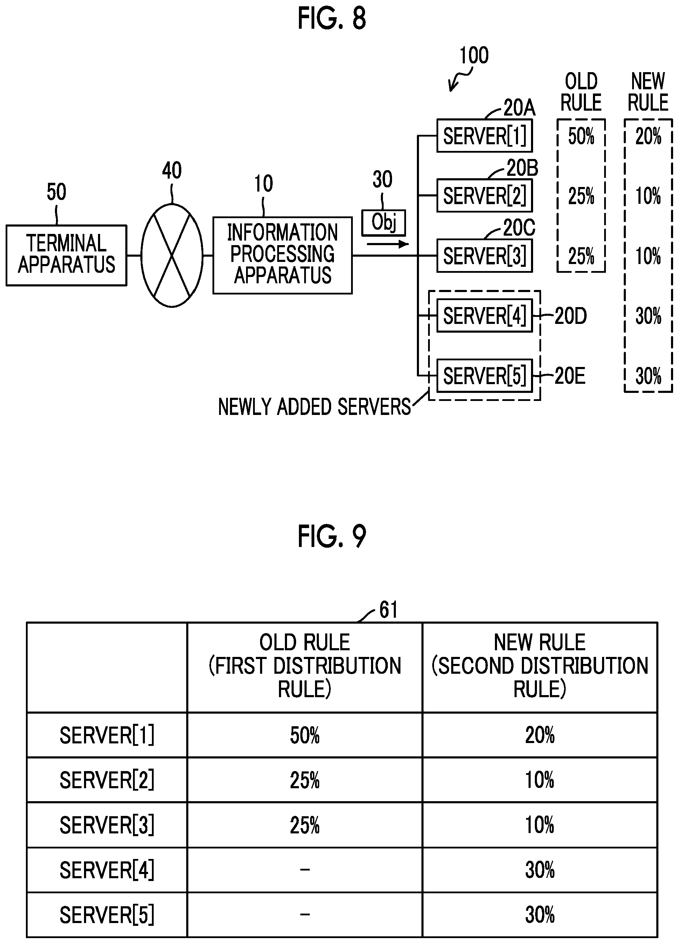

A case of additionally installing a server functioning as a storage node in the storage system 100 is considered. A case where a server[4] 20D and a server[5] 20E are newly added is illustrated in Fig. 8. The distribution rule (hereinafter, referred to as an old rule) corresponding to the bucket created before the addition of the server[4] 20D and the server[5] 20E does not assume presence of the server[4] 20D and the server[5] 20E. Accordingly, the distribution destination of the object corresponding to the old rule normally does not include the added server[4] 20D and the server[5] 20E.

In the example illustrated in Fig. 8, the old rule is defined as setting the allocation ratio of the object 30 for the server[1] 20A to 50%, setting the allocation ratio of the object 30 for the server[2] 20B to 25%, and setting the allocation ratio of the object 30 for the server[3] 20C to 25% (allocation ratio of 2:1:1). For example, the allocation ratio of the object can be determined in accordance with the processing performance of the servers. That is, a higher allocation ratio of the object may be set for a server having higher processing performance. Accordingly, the loads in which the processing performance of the servers is considered can be uniformed.

Even after the addition of the server[4] 20D and the server[5] 20E, the object cannot be distributed to the server[4] 20D and the server[5] 20E as long as the old rule is applied. Therefore, in the information processing apparatus 10 according to the present embodiment, the distribution rule set for a certain bucket can be changed. That is, in a case where a server functioning as a storage node is newly added, a new distribution rule (hereinafter, referred to as a new rule) that includes the added server in the distribution destination is set in the information processing apparatus 10.

In the example illustrated in Fig. 8, the new rule is defined as setting the allocation ratio of the object 30 for the server[1] 20A to 20%, setting the allocation ratio of the object 30 for the server[2] 20B to 10%, setting the allocation ratio of the object 30 for the server[3] 20C to 10%, setting the allocation ratio of the object 30 for the server[4] 20D to 30%, and setting the allocation ratio of the object 30 for the server[5] 20E to 30% (allocation ratio of 2:1:1:3:3).

Fig. 9 is a diagram illustrating an example of the rule information 61 stored in the storage unit 13 of the information processing apparatus 10 according to the present embodiment. As illustrated in Fig. 9, the storage unit 13 of the information processing apparatus 10 stores the old rule (first distribution rule) employed before the addition of the server and the new rule (second distribution rule) employed after the addition of the server. For example, the information processing apparatus 10 generates the old rule at a time of creating the bucket and stores the old rule in the storage unit 13, and generates the new rule at a time of adding the server and stores the new rule in the storage unit 13. In a case of generating the new and old distribution rules, for example, the information processing apparatus 10 generates the distribution rules such that the loads in which the processing performance of the servers installed at the point in time is considered are uniformed. In addition, in a case of generating the new and old distribution rules, the information processing apparatus 10 includes history information indicating which distribution rule is the most recent in the rule information 61.

The information processing apparatus 10 according to the present embodiment functions as the reception unit 70, the selection unit 71, the decision unit 72, and the transmission unit 73 by executing the information processing program 60 by the CPU 11 (refer to Fig. 4).

The reception unit 70 receives the object to be stored transmitted from the terminal apparatus 50.

The selection unit 71 selects the distribution rule in distributing the object to be stored to the server functioning as the storage node. In the present embodiment, in a case where the object to be stored is the new object, the selection unit 71 selects the most recent distribution rule at the point in time. That is, in a case where the new rule is stored in the storage unit 13 of the information processing apparatus 10, the new rule is selected as the distribution rule to be applied to the object to be stored. On the other hand, in a case where the object to be stored is the update object, the selection unit 71 selects the distribution rule applied to the corresponding existing object. That is, in a case where the object to be stored is the update object, and the distribution rule applied to the corresponding existing object is the old rule, the selection unit 71 selects the old rule as the distribution rule to be applied to the object to be stored. On the other hand, in a case where the distribution rule applied to the existing object corresponding to the update object that is the object to be stored is the new rule, the selection unit 71 selects the new rule as the distribution rule to be applied to the object to be stored.

The selection unit 71 creates a distribution log associated with the distribution rule selected for the object to be stored and with the identification information of the object and stores the distribution log in the storage unit 13. The selection unit 71 may refer to the distribution log in selecting the distribution rule and determine whether the object to be stored is the new object or the update object. For example, in a case where an object having the same identification information as the identification information of the object to be stored is recorded in the distribution log, a determination that the object is the update object can be made. In addition, in a case where the object to be stored is the update object, a determination as to whether the distribution rule applied to the corresponding existing object is the old rule or the new rule can be performed by referring to the distribution log.

The decision unit 72 decides the server as the distribution destination corresponding to the distribution rule selected by the selection unit 71. Specifically, as in the information processing apparatus 10 according to the first embodiment, the decision unit 72 calculates the hash value a of the identification information of the object to be stored, calculates the remainder c in dividing the hash value a by the divisor b determined in accordance with the distribution rule selected by the selection unit 71, and decides the distribution destination of the object based on the value of the remainder c.

For example, in a case where the distribution rule selected by the selection unit 71 is the new rule (allocation ratio of 2:1:1:3:3) illustrated in Fig. 9, the decision unit 72 derives 10 (= 2 + 1 + 1 + 3 + 3) as the divisor b determined in accordance with the distribution rule. The decision unit 72 decides the distribution destination of the object to be stored as the server[1] 20A in a case where the remainder c in dividing the hash value a of the identification information of the object to be stored by the divisor b (= 10) is 0 or 1, decides the distribution destination of the object to be stored as the server[2] 20B in a case where the remainder c is 2, decides the distribution destination of the object to be stored as the server[3] 20C in a case where the remainder c is 3, decides the distribution destination of the object to be stored as the server[4] 20D in a case where the remainder c is 4, 5, or 6, and decides the distribution destination of the object to be stored as the server[5] 20E in a case where the remainder c is 7, 8, or 9. Accordingly, the distribution of the object 30 to be stored to the server[1] 20A to the server[5] 20E can be performed using the allocation ratio (2:1:1:3:3) corresponding to the new rule.

Since the identification information of the update object is the same as identification information of the existing object, the remainder c calculated for the update object is the same as the remainder c calculated for the existing object. Accordingly, the same server as the server in which the existing object is stored is decided as the distribution destination of the update object.

The transmission unit 73 transmits the object to be stored to the server as the distribution destination decided by the decision unit 72. The object to be stored is stored in the storage medium such as the hard disk comprised in the server as the distribution destination.

Hereinafter, an action of the information processing apparatus 10 according to the present embodiment will be described with reference to Fig. 6.

In step S1, the reception unit 70 receives the object 30 to be stored transmitted from the terminal apparatus 50.

In step S2, the selection unit 71 selects the distribution rule to be applied to the object received in step S1. Specifically, the selection unit 71 determines whether the object received in step S1 is the new object or the update object by referring to the distribution log. In a case where the object received in step S1 is the new object, the selection unit 71 selects the most recent distribution rule at the point in time. On the other hand, in a case where the object received in step S1 is the update object, the selection unit 71 selects the distribution rule applied to the corresponding existing object. The selection unit 71 specifies the distribution rule applied to the existing object by referring to the distribution log.

In step S3, the decision unit 72 decides the distribution destination corresponding to the distribution rule selected in step S2. Specifically, the decision unit 72 calculates the hash value a of the identification information of the object received in step S1, calculates the remainder c in dividing the hash value a by the divisor b determined in accordance with the distribution rule selected in step S2, and decides the distribution destination of the object to be stored based on the value of the remainder c.

In step S4, the transmission unit 73 transmits the object received in step S1 to the server as the distribution destination decided in step S3. The object is stored in the storage medium such as the hard disk comprised in the server as the distribution destination.

As described so far, the information processing apparatus 10 according to the present embodiment distributes the object to any of the plurality of servers each functioning as the storage node, in accordance with the distribution rule set in advance. In the present embodiment, a case where the distribution rules include the old rule (first distribution rule) set before the addition of the server and the new rule (second distribution rule) that is set after the addition of the server and that includes the added storage node in the distribution destination is assumed. In a case where the object to be distributed is the new object, the information processing apparatus 10 distributes the new object in accordance with the most recent distribution rule, that is, the new rule (second distribution rule). In a case where the object to be distributed is the update object, the information processing apparatus 10 distributes the update object to the same server as the server in which the corresponding existing object is stored, in accordance with the distribution rule applied to the corresponding existing object out of the old rule (first distribution rule) and the new rule (second distribution rule).

According to the information processing apparatus 10 according to the present embodiment, even in a case where the plurality of distribution rules are present, the update object is stored in the same server as the server in which the corresponding existing object is stored. Thus, the specification of the most recent object can be facilitated. While a case where two distribution rules of the old rule and the new rule are included in the rule information 61 is illustrated in the present embodiment, the disclosed technology is not limited to this aspect. For example, in a case where the distribution rule is updated twice or more, three or more distribution rules are included in the rule information 61.

### [Third Embodiment]

As described above, the information processing apparatus 10 sets the distribution rule for the created bucket. The information processing apparatus 10 may set the distribution rule for the bucket as follows.

In creating the bucket on the management console using the terminal apparatus 50, the user can designate an installation location (hereinafter, referred to as a region) of a server group as a storage destination of the object accommodated in the bucket. In a case where the user creates the bucket by designating the region, arranges the object in the bucket, and performs uploading, the object is stored in the server group installed in the designated region.

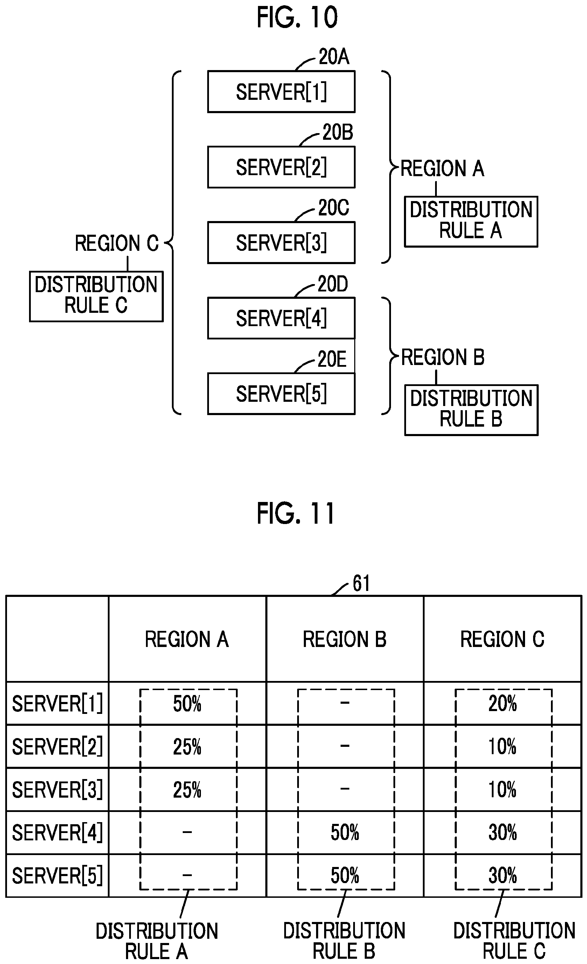

In the present embodiment, the distribution rule is associated with the region in advance. In Fig. 10, a case where a distribution rule A is associated with a region A in which the server[1] 20A to the server[3] 20C are installed, a distribution rule B is associated with a region B in which the server[4] 20D and the server[5] 20E are installed, and a distribution rule C is associated with a region C in which the server[1] 20A to the server[5] 20E are installed is illustrated.

Fig. 11 is a diagram illustrating an example of the rule information 61 stored in the storage unit 13 of the information processing apparatus 10 according to the present embodiment. In Fig. 11, the distribution rule A associated with the region A, the distribution rule B associated with the region B, and the distribution rule C associated with the region C are illustrated. The distribution rule A defines the allocation ratio of the object for each of the server[1] 20A to the server[3] 20C installed in the region A. The distribution rule B defines the allocation ratio of the object for each of the server[4] 20D and the server[5] 20E installed in the region B. The distribution rule C defines the allocation ratio of the object for each of the server[1] 20A to the server[5] 20E installed in the region C.

A create instruction of the bucket accompanying the designation of the region from the terminal apparatus 50 is received by the information processing apparatus 10. The information processing apparatus 10 distributes the object accommodated in the bucket for which the create instruction is provided to the server group installed in the designated region. The information processing apparatus 10 sets the distribution rule associated with the region designated for the bucket as a distribution rule to be applied to the bucket. The information processing apparatus 10 refers to the rule information 61 illustrated in Fig. 11 and sets the distribution rule corresponding to the designated region as the distribution rule to be applied to the bucket.

For example, in a case where the create instruction of the bucket designating the region A is received, the information processing apparatus 10 sets the distribution rule A associated with the region A as the distribution rule to be applied to the object received in the bucket. The information processing apparatus 10 distributes the object accommodated in the bucket to the server group installed in the region A in accordance with the distribution rule A.

In each of the embodiments, for example, the following various processors can be used as a hardware structure of a processing unit executing various types of processing of the reception unit 70, the selection unit 71, the decision unit 72, and the transmission unit 73. The various processors include, in addition to a CPU that is a general-purpose processor functioning as various processing units by executing software (program) as described above, a programmable logic device (PLD) that is a processor such as an FPGA having a circuit configuration changeable after manufacturing, a dedicated electric circuit that is a processor such as an application specific integrated circuit (ASIC) having a circuit configuration dedicatedly designed to execute specific processing, and the like.

One processing unit may be composed of one of the various processors or may be composed of a combination of two or more processors of the same type or different types (for example, a combination of a plurality of FPGAs or a combination of a CPU and an FPGA). In addition, a plurality of processing units may be composed of one processor.

As an example in which the plurality of processing units are composed of one processor, first, as represented by a computer such as a client and a server, a form in which one processor is composed of a combination of one or more CPUs and software and the processor functions as the plurality of processing units is possible. Second, as represented by a system on chip (SoC) and the like, a form of using a processor that implements functions of the entire system including the plurality of processing units in one integrated circuit (IC) chip is possible. Accordingly, the various processing units are configured using one or more of the various processors as a hardware structure.

Furthermore, more specifically, an electric circuit (circuitry) in which circuit elements such as semiconductor elements are combined can be used as the hardware structure of the various processors.

In addition, while an aspect in which the information processing program 60 is stored (installed) in advance in the storage unit 13 has been described in the embodiments, the disclosed technology is not limited thereto. The information processing program 60 may be provided in the form of a recording on a recording medium such as a compact disc read only memory (CD-ROM), a digital versatile disc read only memory (DVD-ROM), and a universal serial bus (USB) memory. In addition, the information processing program 60 may be in the form of a download from an external device through a network.

The disclosure of JP2020-138221 filed on August 18, 2020 is incorporated in the present specification by reference in its entirety. In addition, all documents, patent applications, and technical standards disclosed in the present specification are incorporated in the present specification by reference to the same extent as in a case where each of the documents, patent applications, technical standards are specifically and individually indicated to be incorporated by reference.

## Claims

1. An information processing apparatus that stores an object to be stored in any of a plurality of storage nodes in accordance with a distribution rule set in advance, the apparatus comprising:
at least one processor,
wherein the processor is configured to:
in a case where the object to be stored is a new object that is newly created, distribute the new object in accordance with a distribution rule set at a point in time at which a storage request of the new object is made; and
in a case where the object to be stored is an update object that is an update of an existing object stored in any of the plurality of storage nodes, distribute the update object to the same storage node as a storage node in which the corresponding existing object is stored, in accordance with a distribution rule applied to the corresponding existing object.

2. The information processing apparatus according to claim 1,
wherein the processor is configured to:
distribute an object accommodated in a first accommodation region associated with a first distribution rule among a plurality of accommodation regions for receiving the object to be stored, in accordance with the first distribution rule; and
distribute an object accommodated in a second accommodation region associated with a second distribution rule among the plurality of accommodation regions, in accordance with the second distribution rule.

3. The information processing apparatus according to claim 1,
wherein the distribution rule includes a first distribution rule set before addition of a storage node and a second distribution rule that is set after the addition of the storage node and that includes the added storage node in a distribution destination, and
the processor is configured to:
in a case where the object to be stored is the new object, distribute the new object in accordance with the second distribution rule; and
in a case where the object to be distributed is the update object, distribute the update object to the same storage node as the storage node in which the corresponding existing object is stored, in accordance with the distribution rule applied to the corresponding existing object out of the first distribution rule and the second distribution rule.

4. The information processing apparatus according to any one of claims 1 to 3,
wherein the update object has same identification information as the corresponding existing object, and
the processor is configured to decide a storage node as a distribution destination of the object to be stored based on the identification information.

5. The information processing apparatus according to claim 4,
wherein the processor is configured to decide the storage node as the distribution destination of the object to be stored based on a value of a remainder in dividing a hash value of the identification information by a divisor corresponding to the applied distribution rule.

6. The information processing apparatus according to any one of claims 1 to 5,
wherein the processor is configured to:
receive a create instruction of an accommodation region for receiving the object to be stored and a designation of an installation location of a storage node group as a storage destination of the object received in the accommodation region; and
apply a distribution rule associated with the designated installation location as a distribution rule in distributing the object received in the accommodation region for which the create instruction is provided to the storage node group installed in the designated installation location.

7. An information processing method for performing processing of storing an object to be stored in any of a plurality of storage nodes in accordance with a distribution rule set in advance, the method comprising:
causing at least one processor provided in an information processing apparatus to execute:
distributing, in a case where the object to be stored is a new object that is newly created, the new object in accordance with a distribution rule set at a point in time at which a storage request of the new object is made; and
distributing, in a case where the object to be stored is an update object that is an update of an existing object stored in any of the plurality of storage nodes, the update object to the same storage node as a storage node in which the corresponding existing object is stored, in accordance with a distribution rule applied to the corresponding existing object.

8. An information processing program causing at least one processor provided in an information processing apparatus to execute processing of storing an object to be stored in any of a plurality of storage nodes in accordance with a distribution rule set in advance, the program causing the processor to execute a process comprising:
distributing, in a case where the object to be stored is a new object that is newly created, the new object in accordance with a distribution rule set at a point in time at which a storage request of the new object is made; and
distributing, in a case where the object to be stored is an update object that is an update of an existing object stored in any of the plurality of storage nodes, the update object to the same storage node as a storage node in which the corresponding existing object is stored, in accordance with a distribution rule applied to the corresponding existing object.
